# EUROPEAN PATENT SPECIFICATION

(11) **EP 4 490 939 B1**
(45) Date of publication and mention of the grant of the patent: **01.07.2026**
(21) Application number: 23713436.6
(22) Date of filing: 09.03.2023
(51) Int. Cl.: H04W 36/00, H04W 76/10, H04W 76/25

(54) **NETWORK CONTROL OF SLICE USE**
NETZWERKSTEUERUNG DER SLICE-VERWENDUNG
COMMANDE DE RÉSEAU D'UTILISATION DE TRANCHE

(30) Priority: 11.03.2022 US 202263319169 P
(43) Date of publication of application: 15.01.2025
(60) Divisional application: 26181325.7
(73) Proprietor: Telefonaktiebolaget LM Ericsson (publ), 164 83 Stockholm (SE)
(72) Inventor: FOTI, George, Dollard des Ormeaux, Québec H9G 2Z8 (CA); HEDMAN, Peter, 252 50 Helsingborg (SE)
(74) Representative: Ericsson
(86) International application number: PCT/IB2023/052276
(87) International publication number: WO 2023/170636

(56) References cited:
- EP-A1- 3 641 423
- EP-A1- 4 192 077
- WO-A1-2021/109395
- WO-A1-2022/033521
- NOKIA ET AL: "Evaluation of Solutions for Slice not supported at target (scenario 2)", vol. RAN WG3, no. E-Meeting; 20210125 - 20210204, 14 January 2021 (2021-01-14), XP051969062, Retrieved from the Internet <URL:https://ftp.3gpp.org/tsg_ran/WG3_Iu/TSGR3_111-e/Docs/R3-210694.zip R3-210694_SoluSce2.doc> [retrieved on 20210114]
- HUAWEI: "Further Discussion on Slice Re-mapping", vol. RAN WG3, no. Spokane, Washington, USA; 20170403 - 20170407, 3 April 2017 (2017-04-03), XP051245961, Retrieved from the Internet <URL:http://www.3gpp.org/ftp/Meetings_3GPP_SYNC/RAN3/Docs/> [retrieved on 20170403]

## Description

### Related Applications

This application claims the benefit of provisional patent application serial number 63/319,169, filed March 11, 2022.

### Technical Field

The present disclosure relates to a cellular communications system and, more specifically, network slicing in a cellular communications system.

### Background

In the Third Generating Partnership Project (3GPP) Fifth Generation System (5GS), network slicing is a network architecture in which multiple logical networks are virtualized on the same physical network infrastructure. Each network slice may support one or more services (e.g., an enhanced Mobile Broadband (eMBB) service, an Ultra-Reliable Low-Latency Communication (URLLC) service, etc.), each having its own service-level requirements.

Network Slice Admission Control (NSAC) is defined in 3GPP Technical Specification (TS) 23.501 (see, e.g., V17.3.0) chapter 5.15.11, and Network Slice Admission Control Function (NSACF) procedures are defined in 3GPP TS 23.502 (see, e.g., V17.3.0) chapter 4.2.11. In general, NSAC is used to control the number of registered User Equipments (UEs) or the number of Protocol Data Unit (PDU) sessions per network slice. The NSACF is the Network Function (NF) that performs NSAC.

A description of network slicing is available in 3GPP TS 23.501, and the Fifth Generation System (5GS) procedures are defined in 3GPP TS 23.502.

WO 2021/109395 A1 discloses a wireless communication method for use in an access and mobility management function (AMF) comprising receiving, from a wireless terminal, first requested network slice information of a protocol data unit, PDU, session, generating second requested network slice information based on the first requested network slice information of the PDU session and supported network slice information of a radio access network, RAN, node of the wireless terminal, and transmitting, to a session management function, SMF, the second requested network slice information.

### Summary

According to the independent claims, apparatuses and methods for controlling the use of a network slice in a core network of a cellular communications system are disclosed. Developments are set forth in the dependent claims. In certain examples, the network is enabled to control the use of a network slice, e.g., to alleviate congestion, to enable a network slice to be taken down (e.g., temporarily for maintenance), or the like.

### Brief Description of the Drawings

The accompanying drawing figures incorporated in and forming a part of this specification illustrate several aspects of the disclosure, and together with the description serve to explain the principles of the disclosure.
Figure 1 illustrates one example of a cellular communications system in which embodiments of the present disclosure may be implemented;
Figures 2 and 3 illustrate a wireless communication system represented as a 5^{th} Generation (5G) network architecture;
Figure 4 illustrates the operation of a Network Function (NF) in accordance with one example embodiment;
Figure 5 illustrates example embodiment of the present disclosure in which a Protocol Data Uni (PDU) session(s) are transferred from one network slice to another network slice;
Figure 6 illustrates another example embodiment of the present disclosure in which a PDU session(s) are transferred from one network slice to another network slice;
Figures 7, 8, and 9 are block diagrams of example embodiments of a network node; and
Figures 10 and 11 are block diagrams of example embodiments of a User Equipment (UE).

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

There currently exist certain challenge(s). The existing procedures defined in the 3GPP specifications do not include all desired functionality for controlling the use of a network slice. Operators would like to control the use of a network slice to optimize the performance of their network. The operator may send UE policies for use of a network slice through extended UE Route Selection Policy (URSP) or some other means to have better management of the use of the network. The network monitors the UE compliance to the policies. Note that the actual policies sent to the UE or the means of monitoring them are out of scope of the present disclosure. However, in case of UE non-compliance, the operator may undertake some actions depending on the level of non-compliance by the UE.

Even if the UEs are following network policies, there can be other reasons for a capability to enforce a certain usage of network slices. For example, an operator may like to pull a network slice out of service for maintenance or other reasons and would like to let the UE use another network slice instead.

Finally, the operator may experience congestion in a network slice due to some unforeseen circumstance or, due to Network Slice Admission Control (NSAC) or simply due to there being a large number of UEs using the network slice (e.g. to access higher prioritized services or other UEs being considered to be of higher priority), there is a need to off-load a network slice and therefore the network would like to control the use of the network slice so as to alleviate e.g. the congestion.

Certain aspects of the present disclosure and their embodiments may provide solutions to the aforementioned or other challenges. Embodiments of systems and methods that provide options for the operator to control the use of a network slice, e.g., due to any of the above reasons, are disclosed herein. The actual trigger for control of the use of a network slice is out of the scope of the present disclosure.

Certain embodiments may provide one or more of the following technical advantage(s). Embodiments of the present disclosure may enable the network to control the use of a network slice, e.g., to alleviate congestion, to enable a network slice to be taken down (e.g., temporarily for maintenance), or the like.

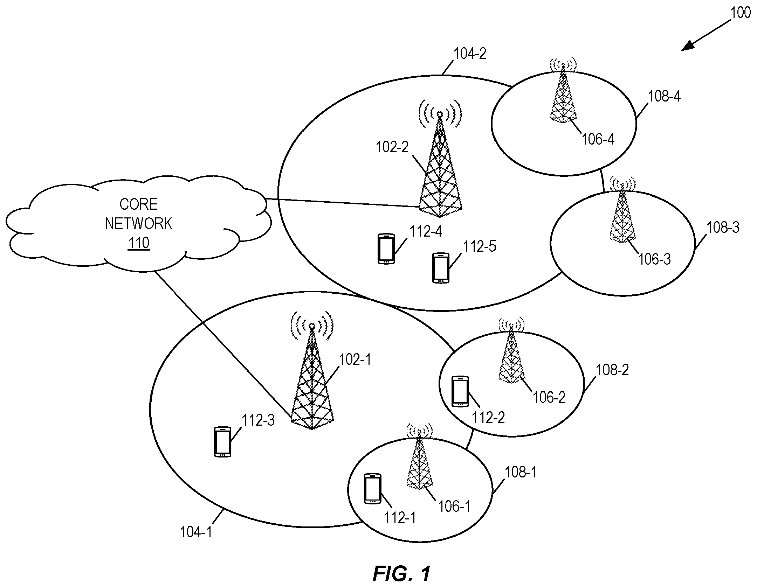

Figure 1 illustrates one example of a cellular communications system 100 in which embodiments of the present disclosure may be implemented. In the embodiments described herein, the cellular communications system 100 is a 5G system (5GS) including a Next Generation RAN (NG-RAN) and a 5G Core (5GC); however, the present disclosure is not limited thereto. In this example, the RAN includes base stations 102-1 and 102-2, which in the 5GS include NR base stations (gNBs) and optionally next generation eNBs (ng-eNBs), controlling corresponding (macro) cells 104-1 and 104-2. The base stations 102-1 and 102-2 are generally referred to herein collectively as base stations 102 and individually as base station 102. Likewise, the (macro) cells 104-1 and 104-2 are generally referred to herein collectively as (macro) cells 104 and individually as (macro) cell 104. The RAN may also include a number of low power nodes 106-1 through 106-4 controlling corresponding small cells 108-1 through 108-4. The low power nodes 106-1 through 106-4 can be small base stations (such as pico or femto base stations) or RRHs, or the like. Notably, while not illustrated, one or more of the small cells 108-1 through 108-4 may alternatively be provided by the base stations 102. The low power nodes 106-1 through 106-4 are generally referred to herein collectively as low power nodes 106 and individually as low power node 106. Likewise, the small cells 108-1 through 108-4 are generally referred to herein collectively as small cells 108 and individually as small cell 108. The cellular communications system 100 also includes a core network 110, which in the 5G System (5GS) is referred to as the 5GC. The base stations 102 (and optionally the low power nodes 106) are connected to the core network 110.

The base stations 102 and the low power nodes 106 provide service to wireless communication devices 112-1 through 112-5 in the corresponding cells 104 and 108. The wireless communication devices 112-1 through 112-5 are generally referred to herein collectively as wireless communication devices 112 and individually as wireless communication device 112. In the following description, the wireless communication devices 112 are oftentimes UEs, but the present disclosure is not limited thereto.

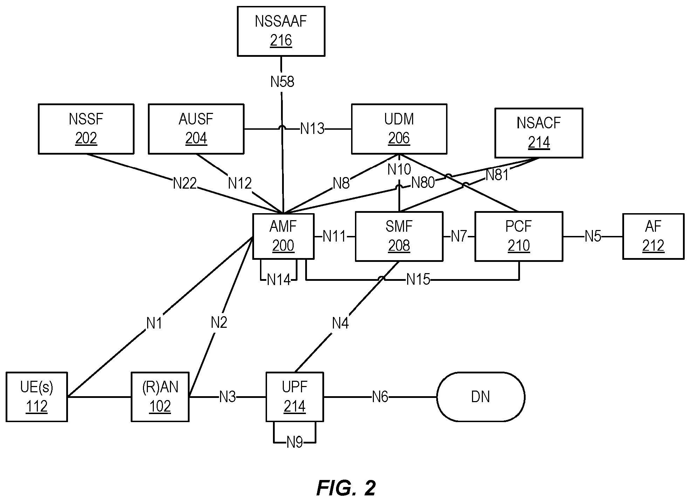

Figure 2 illustrates a wireless communication system represented as a 5G network architecture composed of core Network Functions (NFs), where interaction between any two NFs is represented by a point-to-point reference point/interface. Figure 2 can be viewed as one particular implementation of the system 100 of Figure 1.

Seen from the access side the 5G network architecture shown in Figure 2 comprises a plurality of UEs 112 connected to either a RAN 102 or an Access Network (AN) as well as an AMF 200. Typically, the R(AN) 102 comprises base stations, e.g. such as eNBs or gNBs or similar. Seen from the core network side, the 5GC NFs shown in Figure 2 include a NSSF 202, an AUSF 204, a UDM 206, the AMF 200, a SMF 208, a PCF 210, an Application Function (AF) 212, a Network Slice Admission Control Function (NSACF) 214, and a Network Slice-specific and Stand-alone Non-Public Network (SNPN) Authentication and Authorization Function (NSSAAF) 216.

Reference point representations of the 5G network architecture are used to develop detailed call flows in the normative standardization. The N1 reference point is defined to carry signaling between the UE 112 and AMF 200. The reference points for connecting between the AN 102 and AMF 200 and between the AN 102 and UPF 214 are defined as N2 and N3, respectively. There is a reference point, N11, between the AMF 200 and SMF 208, which implies that the SMF 208 is at least partly controlled by the AMF 200. N4 is used by the SMF 208 and UPF 214 so that the UPF 214 can be set using the control signal generated by the SMF 208, and the UPF 214 can report its state to the SMF 208. N9 is the reference point for the connection between different UPFs 214, and N14 is the reference point connecting between different AMFs 200, respectively. N15 and N7 are defined since the PCF 210 applies policy to the AMF 200 and SMF 208, respectively. N12 is required for the AMF 200 to perform authentication of the UE 112. N8 and N10 are defined because the subscription data of the UE 112 is required for the AMF 200 and SMF 208.

The 5GC network aims at separating UP and CP. The UP carries user traffic while the CP carries signaling in the network. In Figure 2, the UPF 214 is in the UP and all other NFs, i.e., the AMF 200, SMF 208, PCF 210, AF 212, NSSF 202, AUSF 204, and UDM 206, are in the CP. Separating the UP and CP guarantees each plane resource to be scaled independently. It also allows UPFs to be deployed separately from CP functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF 200 and SMF 208 are independent functions in the CP. Separated AMF 200 and SMF 208 allow independent evolution and scaling. Other CP functions like the PCF 210 and AUSF 204 can be separated as shown in Figure 2. Modularized function design enables the 5GC network to support various services flexibly.

Each NF interacts with another NF directly. It is possible to use intermediate functions to route messages from one NF to another NF. In the CP, a set of interactions between two NFs is defined as service so that its reuse is possible. This service enables support for modularity. The UP supports interactions such as forwarding operations between different UPFs.

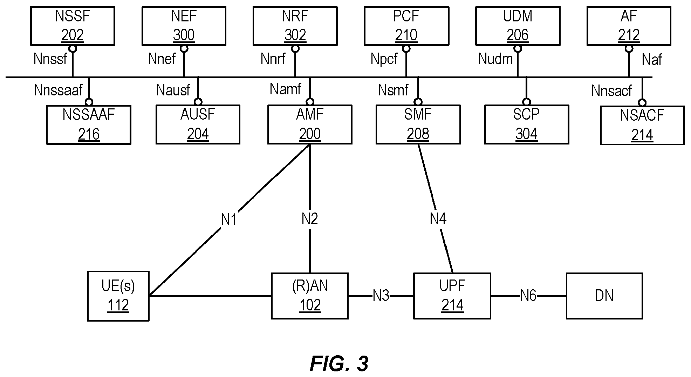

Figure 3 illustrates a 5G network architecture using service-based interfaces between the NFs in the CP, instead of the point-to-point reference points/interfaces used in the 5G network architecture of Figure 2. However, the NFs described above with reference to Figure 2 correspond to the NFs shown in Figure 3. The service(s) etc. that a NF provides to other authorized NFs can be exposed to the authorized NFs through the service-based interface. In Figure 3 the service based interfaces are indicated by the letter "N" followed by the name of the NF, e.g. Namf for the service based interface of the AMF 200 and Nsmf for the service based interface of the SMF 208, etc. The NEF 300, the NRF 302, and a Service Communication Proxy (SCP) 304 in Figure 3 are not shown in Figure 2 discussed above. However, it should be clarified that all NFs depicted in Figure 2 can interact with the NEF 300 and the NRF 302 of Figure 3 as necessary, though not explicitly indicated in Figure 2.

Some properties of the NFs shown in Figures 2 and 3 may be described in the following manner. The AMF 200 provides UE-based authentication, authorization, mobility management, etc. A UE 112 even using multiple access technologies is basically connected to a single AMF 200 because the AMF 200 is independent of the access technologies. The SMF 208 is responsible for session management and allocates Internet Protocol (IP) addresses to UEs. It also selects and controls the UPF 214 for data transfer. If a UE 112 has multiple sessions, different SMFs 208 may be allocated to each session to manage them individually and possibly provide different functionalities per session. The AF 212 provides information on the packet flow to the PCF 210 responsible for policy control in order to support QoS. Based on the information, the PCF 210 determines policies about mobility and session management to make the AMF 200 and SMF 208 operate properly. The AUSF 204 supports authentication function for UEs or similar and thus stores data for authentication of UEs or similar while the UDM 206 stores subscription data of the UE 112. The Data Network (DN), not part of the 5GC network, provides Internet access or operator services and similar.

An NF may be implemented either as a network element on a dedicated hardware, as a software instance running on a dedicated hardware, or as a virtualized function instantiated on an appropriate platform, e.g., a cloud infrastructure.

Embodiments of systems and methods that provide options for the operator to control the use of a network slice. the triggers (i.e., the triggers for controlling the use of a network slice) for the procedures below can be one of many. As an example, the NSACF 214 can initiate an action to the AMF 200 based on network slice congestion. An Operations and Management (O&M) node can initiate the request. A PCF 210 can equally initiate the action.

Embodiments of the present disclosure propose different actions depending in the level of control required. The following network-initiated capabilities are proposed to be supported:
- Case 1: Deregistering network slices for UEs 112 or deregistering the UEs 112 that are registering in network slices without establishing any Protocol Data Unit (PDU) sessions.
- Case 2: Deregistering network slices for UEs 112 or deregistering the UEs 112 that have PDU sessions that are not active.
- Case 3: Enabling PDU sessions to be transferred from one network slice to another network slice, the other network slice can be previously included in the Allowed Network Slice Selection Assistance Information (NSSAI) or will be added to the Allowed NSSAI.

The above capabilities can be applied in the context of deregistering the network slice for a limited number of UEs 112 with progressively applying one or more of the above capabilities, as required, or applying all of the above capabilities in case of a network slice being taken out of service permanently or for a limited time (i.e., in such case the capabilities of case 3 is done first and then subsequently applying the deregistration).

For case 1 and case 2, the AMF 200 can deregister a UE 112 (e.g., when the UE 112 is only registered to one network slice) using existing procedure "network initiated deregistration" as specified in clause 4.2.2.3.3 of 3GPP TS 23.502 or deregistering a network slice for a UE 112 by removing the S-NSSAI from the Allowed NSSAI using the UE Configuration Update procedure as specified in clause 4.2.4.2 of TS 23.502. The AMF 200 first monitors the usage of the network slice, e.g., if no PDU Session is established for a certain time or PDU Session is established but is kept inactive for a certain time, and if not complying with the network policy, the AMF 200 deregisters the UE 112 from the network slice. As stated before, the means of detecting non-compliance are out of scope of the present disclosure as well as triggers can be initiated by other NFs such as PCF 210, NSACF 214.

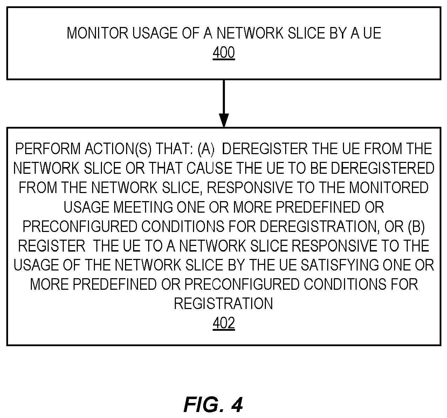

In this regard, Figure 4 illustrates the operation of a NF in accordance with one example embodiment for case 1 and case 2. The NF may be the AMF 300 or some other NF such as, e.g., the PCF 210, the NSACF 214, or the like. As illustrated, the NF monitors the usage of a network slice by a UE 112 (step 400). This monitoring may include monitoring whether the UE 112 has not established a PDU session within a certain time (e.g., within a certain amount of time since the UE 112 registered with the network slice) and/or monitoring whether the UE 112 has an established PDU session on the network slice that has been inactive for a certain amount of time. If monitored usage of the network slice by the UE 112 satisfies one or more predefined or preconfigured conditions for triggering deregistration (e.g., the UE 112 has not established a PDU session on the network slice within a predefined or configured amount of time since registering on the network slice or the PDU session of the UE 112 on the network slice has been inactive for a predefined or configured amount of time), then the NF performs one or more actions that: (A) deregister the UE 112 from the network slice or cause the UE 112 to be deregistered from the network slice responsive to the usage of the network slice by the UE 112 satisfying one or more predefined or preconfigured conditions for deregistration or (B) register the UE 112 to a network slice responsive to the usage of the network slice by the UE 112 satisfying one or more predefined or preconfigured conditions for registration (step 402). For example, the NF may initiate a network-initiated deregistration, e.g., as specified in clause 4.2.2.3.3 of 3GPP TS 23.502 or deregister or initiate deregistration of the network slice for the UE 112 by removing the S-NSSAI of the network slice from the Allowed NSSAI for the UE 112, e.g., using the UE Configuration Update procedure as specified in clause 4.2.4.2 of TS 23.502. For registration, the NF may add the network slice to a set of allowed network slices for the UE (112), e.g., in a registration accept message or UE Configuration Update message.

For case 3, in one option, the AMF 200 initiates UE Configuration Update procedure towards the UE 112. The procedure is extended to support a PDU session transfer request from a source network slice (network slice to be removed) to a new target network slice if the AMF 200 can locate another suitable network slice in the Allowed NSSAI or a new network slice is to be requested. If the target network slice is already in the Allowed NSSAI (before the UE Configuration Update procedure) or is added to the Allowed NSSAI by the UE Configuration Update procedure, the UE then initiates a new PDU session using the target network slice for that purpose and subsequently tears down the PDU session on the source network slice. If the target network slice is required to be registered by the UE 112, i.e. needs to be added to the Allowed NSSAI, the UE 112 first requests the network slice by issuing a registration request and including the target network slice in the Requested NSSAI, and then when the target NSSAI is in the Allowed NSSAI, the UE 112 establishes a PDU Session(s) using the target network slice. If the UE 112 has received information that SSC mode 3 operation applies in this case, the UE 112 includes the "Old PDU Session ID" which indicates the PDU Session ID of the on-going PDU Session to be released and includes "Existing PDU Session" in the PDU Session Establishment request to the AMF 200. If the AMF 200 selects the same old SMF, then it includes the "old PDU session ID" in the request to the old SMF.

In another option, the AMF 200 initiates a request towards the SMF 208 for a PDU session transfer, extending the existing service Nsmf_PDUSession_UpdateSM Context to support transfer of a PDU session from source network slice to target network slice. The SMF 208 instructs the UE 112 that SSC Mode 3 applies
in this case. The SMF 208 uses existing session management procedures extended with the necessary information to notify the UE 112 to initiate a new PDU session towards the target slice. Once the UE 112 successfully establishes the PDU session using the target network slice, the UE 112 tears down the old PDU session. A new SMF can be used to establish the new PDU session, or the same SMF is selected in case of SSC mode 3 and UE uses " Existing PDU Session " as described previously, i.e. if the UE 112 has received information SCC Mode 3 applies.

In either of the above options for case 3, a make before break is assumed.

If the UE 112 did not receive SCC mode 3, then break then make applies using existing procedures.

The extended procedures below illustrate example embodiments of the present disclosure for the two options for case 3described above.

**Option 1** - **PDU Session Transfer from Source Network Slice to Target Network Slice - UE Initiated Approach:** In one embodiment of this option, the UE Configuration Update Procedure is updated to remove the source network slice (e.g., the NSSAI of the source network slice) that needs to be removed from the allowed network slices (e.g., Allowed NSSAI in the following description). In one embodiment, there is a new control information element (IE) to describe the handling of PDU sessions established on a network slice that is now removed from the Allowed NSSAI. The IE information instructs the UE 112 to transfer the PDU session from the removed network slice or to be removed network slice in Allowed NSSAI to a new target network slice in the Allowed NSSAI (as indicated via the UE Configuration Procedure). The to be removed network slice can either be kept in the Allowed NSSAI for the duration of the UE Configuration Update procedure and later removed, or directly removed by the UE Configuration Update command, but regarded as still allowed until the transfer to the target network slice has been completed.

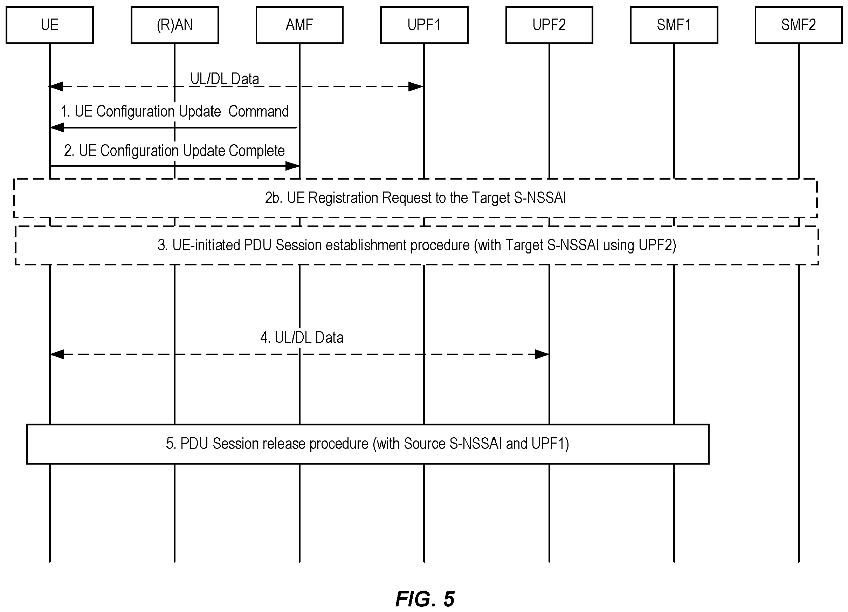

The call flow in Figure 5 illustrates one example embodiment of Option 1, and further encompasses the invention. The following is a brief description of the steps in the call flow. The assumption in the call flow is the UE 112 that has some PDU Sessions already established on a network slice and these PDU sessions have to be transferred to another network slice.
- **Step 1:** In this step, the AMF 200 initiates a UE Configuration Update Command. The UE Configuration Update Command includes information that indicates, in (or in relation to) the Allowed NSSAI, the network slice to be removed. The UE Configuration Update Command also includes a new IE to instruct the UE 112 regarding the removed slice (or to be removed network slice). In this embodiment, the UE Configuration Update Command (e.g., the new IE) also indicates the target network slice (e.g., indicates which NSSAI in the Allowed NSSAIs is the target network slice). The UE Configuration Update Command (e.g., the new IE) indicates that the UE 112 can apply SSC mode 3 logic for the PDU Session transfer, as per the invention. In this case, the UE 112 is instructed to perform a PDU session transfer with make before break of all PDU Sessions using the to be removed network slice to the Target network slice. Editor's Note: It is FFS if additional information is to be included in the new IE to perform PDU Session Transfer.
- In step 2 the UE acknowledges the reception of the Configuration Update Command
- **Step 2b (Optional):** As stated before, in an alternative embodiment, the target network slice is not added to the Allowed NSSAI via the UE Configuration Update procedure. In this alternative embodiment, the UE 112 requests to be registered to the target network slice by issuing a registration request where the registration request includes the target network slice (e.g., Target NSSAI) in the Requested NSSAI. Then, when the target NSSAI is in the Allowed NSSAI as a result of the registration request, the UE establish PDU Session(s) for the transfer using the target network slice (see step 3).
- **Step 3:** The UE 112 performs a UE-initiated PDU establishment procedure to reestablish the PDU session(s) that were previously on the source network slice on the target network slice.

While note necessary for understanding of embodiments of the present disclosure, additional details regarding step 3 and the remaining steps of Figure 5 are based on existing procedures per clause 4.3.5.2 of TS 23.502.

**Option 2** - **PDU Session Transfer from Source Slice to Target Slice** - **Network Initiated Approach:** In one embodiment of this option, the network slices in Allowed NSSAI are not changed, but one of the network slices is temporarily taken out of service, or should not be used, as an example. The AMF 200 instructs the SMF 208 used for the source network slice (i.e., network slice to not to be used), to initiate a PDU Session Transfer from the source network slice to the target network slice (new network slice to be used). The Nsmf_PDUSession_UpdateSMContext service is extended to support such a capability, e.g. the AMF 200 indicates the Target network slice to the SMF 208. The SMF 208 in turn sends a PDU Session Modification Request to the UE 112 to initiate a PDU Session transfer. The PDU Modification Session Request is extended to support this new capability (e.g., adding target slice, and optionally source slice that otherwise could be derived from existing PDU Session, either in PCO together with existing "PDU Session Address Lifetime value" or in a new IE, and SSC mode 3 logic can be used by the UE when establishing the new PDU Session, i.e. indicating "Existing PDU Session" and PDU Session ID). Optionally, instead of a PDU Modification Session request, a new PDU Session Transfer Message is created and dedicated for this purpose. Once the UE 112 successfully establishes the PDU session using the new target slice and usually the same Data Network Name (DNN), the UE 112 can release the old PDU session used with the source network slice (i.e., locally in the UE 112 or by explicit signaling, if locally is done the AMF 200 applies the same logic and locally releases the PDU Session within the network as per existing procedures). A new SMF can be used to establish the new PDU session.

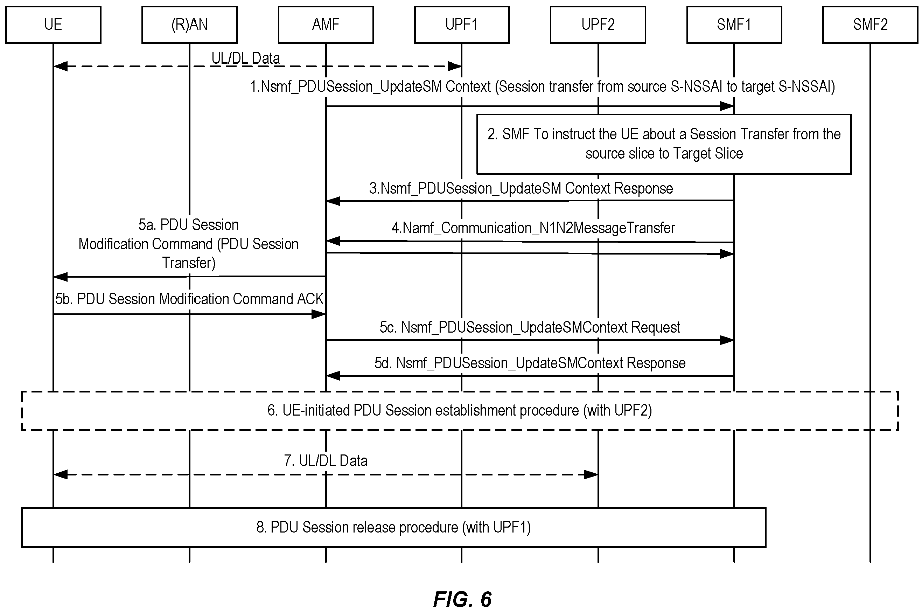

The call flow in Figure 6 illustrates one example embodiment of the procedure described above for Option 2, and encompasses the invention. The assumption in the call flow is the UE 112 has some PDU Sessions already established on a network slice, and these PDU sessions have to be transferred to another network slice. For the sake of this example, it is assumed that the target slice is already in the Allowed Slices the UE received in a previous registration.
- **Step 1:** In this step, the AMF 200 initiates a Nsmf_PDUSession_UpdateSMContext Request to initiate a PDU session transfer from a source slice to a target slice. The Request is extended to support this new capability, e.g. the Target network slice to the SMF 208 and possibly an indication that a transfer is to be initiated. The Request is now extended with some or all of the following optional information so that the SMF 208 can inform the UE 112 to perform a PDU Session transfer from source slice to a target slice:
   ∘ Source network Slice
   ∘ Target network Slice
   ∘ Action : Perform Session transfer for all PDU sessions immediately or at a scheduled tie time applicable to the UE location.
   ∘ That SSC mode 3 logic can be applied (as per the invention).
- **Step 2:** The SMF 208 initiates action to notify the UE 112 about a PDU session transfer from a source slice to a target slice as indicated above in extending the PDU Session Modification Request sent to the UE to include the needed information.
- **Step 3:** The SMF 208 returns Nsmf_PDUSession_UpdateSMContext response to the AMF 200.
- **Step 4:** The SMF 208 invokes the Namf_Communication_N1N2MessageTransfer to include an SM container towards the UE 112 with a PDU Session Modification Command extended (e.g., with target S-NSSAI) to inform the UE 112 of a PDU Session Transfer. Optionally a new message can be created and dedicated for the purpose of a PDU session transfer from a source slice to a target slice.
- **Step 5:** The AMF 200 forwards the SM Container content to the UE 112.

The remaining steps are based on existing procedures per clause 4.3.5.2. of 3GPP TS 23.502.

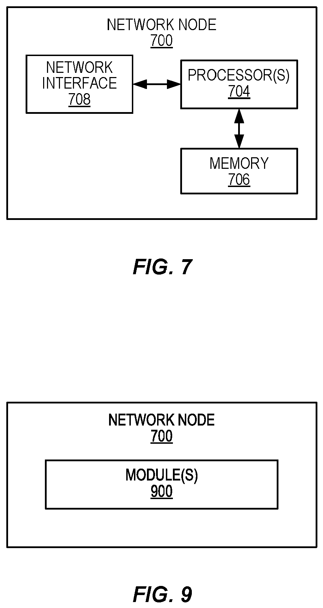

Figure 7 is a schematic block diagram of a network node 700 according to some embodiments of the present disclosure. Optional features are represented by dashed boxes. The network node 700 may be, for example, a core network node that implements a NF (e.g., AMF 200, SMF 208, PCT 210, or NSACF 214) or a network node that implements all or part of the functionality of an NF (e.g., all or part of the functionality of the AMF 200, the SMF 208, or the NSACF 304 described herein). As illustrated, the network node 700 includes a one or more processors 704 (e.g., Central Processing Units (CPUs), Application Specific Integrated Circuits (ASICs), Field Programmable Gate Arrays (FPGAs), and/or the like), memory 706, and a network interface 708. The one or more processors 704 are also referred to herein as processing circuitry. The one or more processors 704 operate to provide one or more functions of the network node 700 as described herein (e.g., one or more functions of the AMF 200, SMF 208, PCT 210, or NSACF 214 described herein). In some embodiments, the function(s) are implemented in software that is stored, e.g., in the memory 706 and executed by the one or more processors 704.

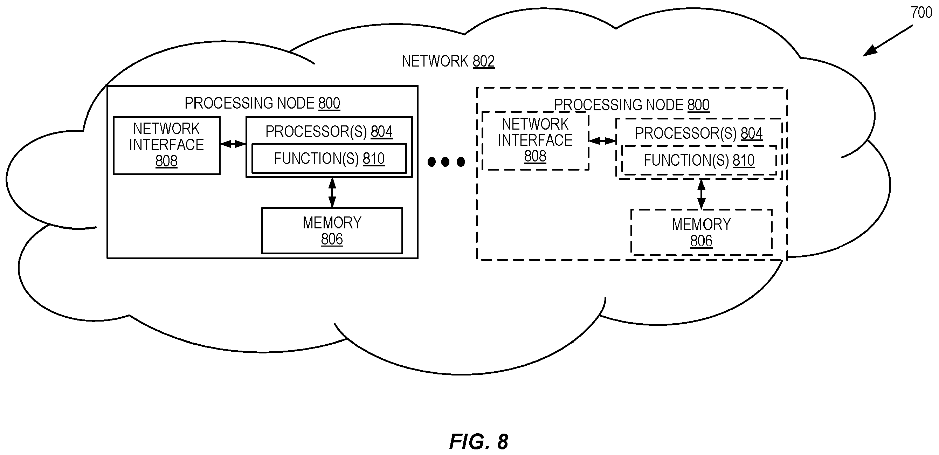

Figure 8 is a schematic block diagram that illustrates a virtualized embodiment of the network node 700 according to some embodiments of the present disclosure. Again, optional features are represented by dashed boxes. As used herein, a "virtualized" network node is an implementation of the network node 700 in which at least a portion of the functionality of the network node 700 is implemented as a virtual component(s) (e.g., via a virtual machine(s) executing on a physical processing node(s) in a network(s)). As illustrated, in this example, the network node 700 includes one or more processing nodes 800 coupled to or included as part of a network(s) 802. Each processing node 800 includes one or more processors 804 (e.g., CPUs, ASICs, FPGAs, and/or the like), memory 806, and a network interface 808. In this example, functions 810 of the network node 700 described herein (e.g., one or more functions of the AMF 200, SMF 208, PCT 210, or NSACF 214 described herein) are implemented at the one or more processing nodes 800 or distributed across the two or more processing nodes 800 in any desired manner. In some particular embodiments, some or all of the functions 810 of the network node 700 described herein are implemented as virtual components executed by one or more virtual machines implemented in a virtual environment(s) hosted by the processing node(s) 800.

In some embodiments, a computer program including instructions which, when executed by at least one processor, causes the at least one processor to carry out the functionality of the network node 700 or a node (e.g., a processing node 800) implementing one or more of the functions 810 of the network node 700 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 9 is a schematic block diagram of the network node 700 according to some other embodiments of the present disclosure. The network node 700 includes one or more modules 900, each of which is implemented in software. The module(s) 900 provide the functionality of the network node 700 described herein. This discussion is equally applicable to the processing node 800 of Figure 8 where the modules 900 may be implemented at one of the processing nodes 800 or distributed across multiple processing nodes 800.

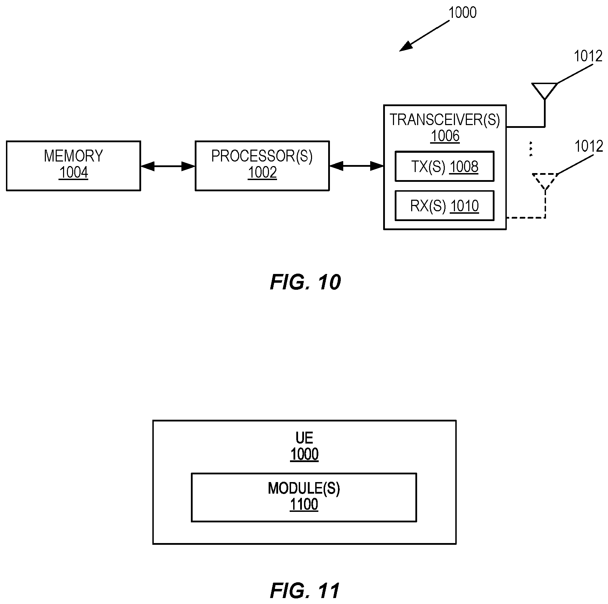

Figure 10 is a schematic block diagram of a wireless communication device 1000 (e.g., UE 112) according to some embodiments of the present disclosure. As illustrated, the wireless communication device 1000 includes one or more processors 1002 (e.g., CPUs, ASICs, FPGAs, and/or the like), memory 1004, and one or more transceivers 1006 each including one or more transmitters 1008 and one or more receivers 1010 coupled to one or more antennas 1012. The transceiver(s) 1006 includes radio-front end circuitry connected to the antenna(s) 1012 that is configured to condition signals communicated between the antenna(s) 1012 and the processor(s) 1002, as will be appreciated by on of ordinary skill in the art. The processors 1002 are also referred to herein as processing circuitry. The transceivers 1006 are also referred to herein as radio circuitry. In some embodiments, the functionality of the wireless communication device 1000 described above may be fully or partially implemented in software that is, e.g., stored in the memory 1004 and executed by the processor(s) 1002. Note that the wireless communication device 1000 may include additional components not illustrated in Figure 10 such as, e.g., one or more user interface components (e.g., an input/output interface including a display, buttons, a touch screen, a microphone, a speaker(s), and/or the like and/or any other components for allowing input of information into the wireless communication device 1000 and/or allowing output of information from the wireless communication device 1000), a power supply (e.g., a battery and associated power circuitry), etc.

In some embodiments, a computer program including instructions which, when executed by at least one processor, causes the at least one processor to carry out the functionality of the wireless communication device 1000 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 11 is a schematic block diagram of the wireless communication device 1000 (e.g., UE 112) according to some other embodiments of the present disclosure. The wireless communication device 1000 includes one or more modules 1100, each of which is implemented in software. The module(s) 1100 provide the functionality of the wireless communication device 1000 described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

## Claims

1. A method performed by a Access and Mobility Management Function, AMF, in a core network (110) of a cellular communications system (100), the method comprising:
sending (Fig. 6, step 1), to a Session Management Function, SMF, associated with a first network slice, a first message that initiates transfer of one or more Protocol Data Unit, PDU, sessions of a User Equipment, UE, (112) from the first network slice to a second network slice, wherein the first message comprises information that indicates the second network slice and information that indicates that Session and Service Continuity, SSC, mode 3 logic can be applied;
receiving (Fig. 6, step 4), from the SMF, a second message comprising a session management message that causes the transfer of the one or more PDU sessions of the UE (112) from the first network slice to the second network slice; and
sending (Fig. 6, step 5a) the session management message to the UE (112).

2. The method of claim 1 wherein the first message further comprises information that indicates the first network slice.

3. The method of claim 1 or 2 wherein the first message further comprises:
information that indicates whether the transfer of the one or more PDU sessions from the first network slice to the second network slice is to be performed immediately or at a scheduled time.

4. The method of any of claims 1 to 3 wherein the session management message is a PDU session modification request; and/or
wherein the first message is a Nsmf_PDUSession_UpdateSMContext Request.

5. A network node (700) for implementing an Access and Mobility Management Function, AMF, for a core network (110) of a cellular communications system (100), the network node (700) comprising processing circuitry (704; 804) configured to cause the network node (700) to perform the method of any of claims 1 to 4.

6. A method performed by a Session Management Function, SMF, associated with a first network slice in a core network (110) of a cellular communications system (100), the method comprising:
receiving (Fig. 6, step 1), from an Access and Mobility Management Function, AMF, a first message that initiates transfer of one or more Protocol Data Unit, PDU, sessions of a User Equipment, UE, (112) from the first network slice to a second network slice, wherein the first message comprises information that indicates the second network slice and information that indicates that Session and Service Continuity, SSC, mode 3 logic can be applied;
and
sending (Fig. 6, step 4), toward the UE (112), a session management message that causes the transfer of the one or more PDU sessions of the UE (112) from the first network slice to the second network slice.

7. The method of claim 6 wherein the first message further comprises information that indicates the first network slice.

8. The method of claim 6 or 7 wherein the first message further comprises:
information that indicates whether the transfer of the one or more PDU sessions from the first network slice to the second network slice is to be performed immediately or at a scheduled time.

9. The method of any of claims 6 to 8 wherein:
{i} sending (Fig. 6, step 4) the session management message toward the UE (112) comprises sending (Fig. 6, step 4) a second message comprising the session management message to the AMF; and/or
{ii}wherein the first message is a Nsmf_PDUSession_UpdateSMContext Request; and/or
{iii} wherein the session management message is a PDU session modification request.

10. A network node (700) for implementing a Session Management Function, SMF, associated with a first network slice in a core network (110) of a cellular communications system (100), the network node (700) comprising processing circuitry (704; 804) configured to cause the network node (700) to perform the method of any of claims 6 to 9.

11. A method performed by a User Equipment, UE, (112), the method comprising:
receiving (Fig. 6, step 5a) a first message from a Session Management Function, SMF, wherein the first message initiates transfer of one or more Protocol Data Unit, PDU, sessions of the UE (112) from a first network slice to a second network slice, wherein the first message comprises information that indicates the second network slice and information that indicates that Session and Service Continuity, SSC,
mode 3 logic can be applied; and performing one or more actions to effect the transfer of the one or more PDU sessions from the first network slice to the second network slice responsive to the first message.

12. The method of claim 11 wherein the first message further comprises information that indicates the first network slice.

13. The method of any of claims 11 to 12 wherein the first message is a PDU session modification request.

14. A User Equipment, UE, (1000) comprising:
one or more transmitters (1008);
one or more receivers (1010);
processing circuitry (1002) associated with the one or more transmitters (1008) and the one or more receivers (1010), the processing circuitry configured to cause the UE (1000) to perform the method of any of claims 11 to 13.

15. A method performed by a Access and Mobility Management Function, AMF, in a core network (110) of a cellular communications system (100), the method comprising:
sending (Fig. 5, step 1), towards a User Equipment, UE, (112), a UE configuration update command comprising:
information that indicates that a first network slice is removed or is to be removed from a set of allowed network slices for the UE (112);
information that indicates an instruction to transfer one or more Protocol Data Unit, PDU, sessions of the UE (112) established on the first network slice to a second network slice; and
an indication that the UE (112) can apply Session and Service Continuity, SSC, mode 3 logic for the PDU
Session transfer.

16. The method of claim 15 wherein the UE configuration update command further comprises information that adds the second network slice to the set of allowed network slices of the UE (112); or
wherein the UE configuration update command does not add the second network slice to the set of allowed network slices of the UE (112).

17. A method performed by a User Equipment, UE, (112), the method comprising:
receiving (Fig. 5, step 1), from a Access and Mobility Management Function, AMF, in a core network (110) of a cellular communications system (100), a UE configuration update command comprising:
information that indicates that a first network slice is removed or is to be removed from a set of allowed network slices for the UE (112); and
information that indicates an instruction to transfer one or more Protocol Data Unit, PDU, sessions of the UE (112) established on the first network
slice to a second network slice; and
performing (Fig. 5, step 3) a PDU session establishment procedure with respect to the second network slice to transfer the one or more PDU sessions from the first network slice to the second network slice,
wherein the UE configuration update command further comprises an indication that the UE (112) can apply Session and Service Continuity, SSC, mode 3 logic for the PDU Session transfer.

18. The method of claim 17 wherein the UE configuration update command further comprises information that adds the second network slice to the set of allowed network slices of the UE (112).

19. The method of claim 17 or 18 further comprising sending (Fig. 5, step 2b) a
registration request to the second network slice whereby a target network slice is added to the set of allowed network slices of the UE (112).

20. A User Equipment, UE, (112), adapted to perform the method of any of claims 17 to 19.

## Patentansprüche

1. Verfahren, das durch eine Zugangs- und Mobilitätsverwaltungsfunktion, AMF, in einem Kernnetzwerk (110) eines Mobilfunkkommunikationssystems (100) durchgeführt wird, wobei das Verfahren Folgendes umfasst:
Senden (Fig. 6, Schritt 1), an eine Sitzungsverwaltungsfunktion, SMF, die einem ersten Netzwerk-Slice zugeordnet ist, einer ersten Nachricht, die eine Übergabe von einer oder mehreren Protokolldateneinheitssitzungen, PDU-Sitzungen, einer Benutzereinrichtung, UE (112), von dem ersten Netzwerk-Slice an einen zweiten Netzwerk-Slice initiiert, wobei die erste Nachricht Informationen, die den zweiten Netzwerk-Slice angeben, und Informationen, die angeben, dass eine Sitzungs- und Dienstkontinuitäts(SSC)-Modus-3-Logik angewendet werden kann, umfasst;
Empfangen (Fig. 6, Schritt 4), von der SMF, einer zweiten Nachricht, die eine Sitzungsverwaltungsnachricht umfasst,
welche die Übergabe der einen oder der mehreren PDU-Sitzungen der UE (112) von dem ersten Netzwerk-Slice an den zweiten Netzwerk-Slice veranlasst; und
Senden (Fig. 6, Schritt 5a) der Sitzungsverwaltungsnachricht an die UE (112).

2. Verfahren nach Anspruch 1, wobei die erste Nachricht ferner Informationen umfasst, die den ersten Netzwerk-Slice angeben.

3. Verfahren nach Anspruch 1 oder 2, wobei die erste Nachricht ferner Folgendes umfasst:
Informationen, die angeben, ob die Übergabe der einen oder der mehreren PDU-Sitzungen von dem ersten Netzwerk-Slice an den zweiten Netzwerk-Slice unmittelbar oder zu einem geplanten Zeitpunkt durchzuführen ist.

4. Verfahren nach einem der Ansprüche 1 bis 3, wobei die Sitzungsverwaltungsnachricht eine PDU-Sitzungsmodifikationsanfrage ist; und/oder
wobei die erste Nachricht eine Nsmf_PDUSession_UpdateSMContext-Anfrage ist.

5. Netzwerkknoten (700) zum Implementieren einer Zugangs- und Mobilitätsverwaltungsfunktion, AMF, für ein Kernnetzwerk (110) eines Mobilfunkkommunikationssystems (100), wobei der Netzwerkknoten (700) eine Verarbeitungsschaltung (704; 804) umfasst, die dazu konfiguriert ist, zu veranlassen, dass der Netzwerkknoten (700) das Verfahren nach einem der Ansprüche 1 bis 4 durchführt.

6. Verfahren, das durch eine Sitzungsverwaltungsfunktion, SMF, durchgeführt wird, die einem ersten Netzwerk-Slice in einem Kernnetzwerk (110) eines Mobilfunkkommunikationssystems (100) zugeordnet ist, wobei das Verfahren Folgendes umfasst:
Empfangen (Fig. 6, Schritt 1), von einer Zugangs- und Mobilitätsverwaltungsfunktion, AMF, einer ersten Nachricht, die eine Übergabe von einer oder mehreren Protokolldateneinheitssitzungen, PDU-Sitzungen, einer Benutzereinrichtung, UE (112), von dem ersten Netzwerk-Slice an einen zweiten Netzwerk-Slice initiiert, wobei die erste Nachricht Informationen, die den zweiten Netzwerk-Slice angeben, und Informationen, die angeben, dass eine Sitzungs- und Dienstkontinuitäts(SSC)-Modus-3-Logik angewendet werden kann, umfasst; und Senden (Fig. 6, Schritt 4), an die UE (112), einer Sitzungsverwaltungsnachricht, welche die Übergabe der einen oder der mehreren PDU-Sitzungen der UE (112) von dem ersten Netzwerk-Slice an den zweiten Netzwerk-Slice veranlasst.

7. Verfahren nach Anspruch 6, wobei die erste Nachricht ferner Informationen umfasst, die den ersten Netzwerk-Slice angeben.

8. Verfahren nach Anspruch 6 oder 7, wobei die erste Nachricht ferner Folgendes umfasst:
Informationen, die angeben, ob die Übergabe der einen oder der mehreren PDU-Sitzungen von dem ersten Netzwerk-Slice an den zweiten Netzwerk-Slice unmittelbar oder zu einem geplanten Zeitpunkt durchzuführen ist.

9. Verfahren nach einem der Ansprüche 6 bis 8, wobei:
{i} das Senden (Fig. 6, Schritt 4) der Sitzungsverwaltungsnachricht an die UE (112) Senden (Fig. 6, Schritt 4) einer zweiten Nachricht, welche die Sitzungsverwaltungsnachricht umfasst, an die AMF umfasst; und/oder
{ii} wobei die erste Nachricht eine Nsmf_PDUSession_UpdateSMContext-Anfrage ist; und/oder
{iii} wobei die Sitzungsverwaltungsnachricht eine PDU-Sitzungsmodifikationsanfrage ist.

10. Netzwerkknoten (700) zum Implementieren einer Sitzungsverwaltungsfunktion, SMF, die einem ersten Netzwerk-Slice in einem Kernnetzwerk (110) eines Mobilfunkkommunikationssystems (100) zugeordnet ist, wobei der Netzwerkknoten (700) eine Verarbeitungsschaltung (704; 804) umfasst, die dazu konfiguriert ist, zu veranlassen, dass der Netzwerkknoten (700) das Verfahren nach einem der Ansprüche 6 bis 9 durchführt.

11. Verfahren, das durch eine Benutzereinrichtung, UE (112), durchgeführt wird, wobei das Verfahren Folgendes umfasst:
Empfangen (Fig. 6, Schritt 5a) einer ersten Nachricht von einer Sitzungsverwaltungsfunktion, SMF, wobei die erste Nachricht eine Übergabe von einer oder mehreren Protokolldateneinheitssitzungen, PDU-Sitzungen, der UE (112) von einem ersten Netzwerk-Slice an einen zweiten Netzwerk-Slice initiiert, wobei die erste Nachricht Informationen, die den zweiten Netzwerk-Slice angeben, und Informationen, die angeben, dass eine Sitzungs- und Dienstkontinuitäts (SSC)-Modus-3-Logik angewendet werden kann, umfasst; und
Durchführen von einer oder mehreren Handlungen, um die Übergabe der einen oder der mehreren PDU-Sitzungen von dem ersten Netzwerk-Slice an den zweiten Netzwerk-Slice als Reaktion auf die erste Nachricht zu bewirken.

12. Verfahren nach Anspruch 11, wobei die erste Nachricht ferner Informationen umfasst, die den ersten Netzwerk-Slice angeben.

13. Verfahren nach einem der Ansprüche 11 bis 12, wobei die erste Nachricht eine PDU-Sitzungsmodifikationsanfrage ist.

14. Benutzereinrichtung, UE (1000), umfassend:
einen oder mehrere Sender (1008);
einen oder mehrere Empfänger (1010);
eine Verarbeitungsschaltung (1002), die dem einen oder den mehreren Sendern (1008) und dem einen oder den mehreren Empfängern (1010) zugeordnet ist, wobei die Verarbeitungsschaltung dazu konfiguriert ist, zu veranlassen, dass die UE (1000) das Verfahren nach einem der Ansprüche 11 bis 13 durchführt.

15. Verfahren, das durch eine Zugangs- und Mobilitätsverwaltungsfunktion, AMF, in einem Kernnetzwerk (110) eines Mobilfunkkommunikationssystems (100) durchgeführt wird, wobei das Verfahren Folgendes umfasst:
Senden (Fig. 5, Schritt 1), an die Benutzereinrichtung, UE (112), eines UE-Konfigurationsaktualisierungsbefehls, der Folgendes umfasst:
Informationen, die angeben, dass ein erster Netzwerk-Slice aus einem Satz von zulässigen Netzwerk-Slices für die UE (112) entfernt wird oder zu entfernen ist; Informationen, die eine Anweisung zum Übergeben von einer oder mehreren Protokolldateneinheitssitzungen, PDU-Sitzungen, der UE (112), die auf dem ersten Netzwerk-Slice eingerichtet sind, an einen zweiten Netzwerk-Slice angeben; und
eine Angabe, dass die UE (112) eine Sitzungs- und Dienstkontinuitäts(SSC)-Modus-3-Logik für die PDU-Sitzungs-übergabe anwenden kann.

16. Verfahren nach Anspruch 15, wobei der UE-Konfigurationsaktualisierungsbefehl ferner Informationen umfasst, die den zweiten Netzwerk-Slice dem Satz von zulässigen Netzwerk-Slices der UE (112) hinzufügen; oder
wobei der UE-Konfigurationsaktualisierungsbefehl den zweiten Netzwerk-Slice dem Satz von zulässigen Netzwerk-Slices der UE (112) nicht hinzufügt.

17. Verfahren, das durch eine Benutzereinrichtung, UE (112), durchgeführt wird, wobei das Verfahren Folgendes umfasst:
Empfangen (Fig. 5, Schritt 1), von einer Zugangs- und Mobilitätsverwaltungsfunktion, AMF, in einem Kernnetzwerk (110) eines Mobilfunkkommunikationssystems (100), eines UE-Konfigurationsaktualisierungsbefehls, der Folgendes umfasst:
Informationen, die angeben, dass ein erster Netzwerk-Slice aus einem Satz von zulässigen Netzwerk-Slices für die UE (112) entfernt wird oder zu entfernen ist; und Informationen, die eine Anweisung zum Übergeben von einer oder mehreren Protokolldateneinheitssitzungen, PDU-Sitzungen, der UE (112), die auf dem ersten Netzwerk-Slice eingerichtet sind, an einen zweiten Netzwerk-Slice angeben; und
Durchführen (Fig. 5, Schritt 3) einer PDU-Sitzungseinrichtungsprozedur in Bezug auf den zweiten Netzwerk-Slice,
um die eine oder die mehreren PDU-Sitzungen von dem ersten Netzwerk-Slice an den zweiten Netzwerk-Slice zu übergeben, wobei der UE-Konfigurationsaktualisierungsbefehl ferner eine Angabe umfasst, dass die UE (112) eine Sitzungs- und Dienstkontinuitäts(SSC)-Modus-3-Logik für die PDU-Sitzungs-übergabe anwenden kann.

18. Verfahren nach Anspruch 17, wobei der UE-Konfigurationsaktualisierungsbefehl ferner Informationen umfasst, die den zweiten Netzwerk-Slice dem Satz von zulässigen Netzwerk-Slices der UE (112) hinzufügen.

19. Verfahren nach Anspruch 17 oder 18, ferner umfassend Senden (Fig. 5, Schritt 2b) einer Registrierungsanfrage an den zweiten Netzwerk-Slice, wodurch dem Satz von zulässigen Netzwerk-Slices der UE (112) ein Ziel-Netzwerk-Slice hinzugefügt wird.

20. Benutzereinrichtung, UE (112), die dazu ausgelegt ist, das Verfahren nach einem der Ansprüche 17 bis 19 durchzuführen.

## Revendications

1. Procédé réalisé par une fonction de gestion d'accès et de mobilité, AMF, dans un réseau central (110) d'un système de communications cellulaires (100), le procédé comprenant :
l'envoi (Fig. 6, étape 1), à une fonction de gestion de session, SMF, associée à une première tranche de réseau, d'un premier message qui initie le transfert d'une ou plusieurs sessions d'une unité de données de protocole, PDU, d'un équipement utilisateur, UE, (112) de la première tranche de réseau vers une seconde tranche de réseau, dans lequel le premier message comprend des informations qui indiquent la seconde tranche de réseau et des informations qui indiquent qu'une logique de mode 3 de continuité de session et de service, SSC, peut être appliquée ;
la réception (Fig. 6, étape 4), provenant de la SMF, d'un second message comprenant un message de gestion de session qui provoque le transfert des une ou plusieurs sessions de PDU de l'UE (112) de la première tranche de réseau vers la seconde tranche de réseau ; et
l'envoi (Fig. 6, étape 5a) du message de gestion de session à l'UE (112).

2. Procédé selon la revendication 1, dans lequel le premier message comprend en outre des informations qui indiquent la première tranche de réseau.

3. Procédé selon la revendication 1 ou 2, dans lequel le premier message comprend en outre :
des informations qui indiquent si le transfert des une ou plusieurs sessions de PDU de la première tranche de réseau vers la seconde tranche de réseau doit être réalisé immédiatement ou à une heure programmée.

4. Procédé selon l'une quelconque des revendications 1 à 3, dans lequel le message de gestion de session est une requête de modification de session de PDU ; et/ou
dans lequel le premier message est une demande Nsmf_PDUSession_UpdateSMContext.

5. Nœud de réseau (700) pour la mise en œuvre d'une fonction de gestion d'accès et de mobilité, AMF, pour un réseau central (110) d'un système de communications cellulaires (100), le nœud de réseau (700) comprenant un circuit de traitement (704 ; 804) configuré pour amener le nœud de réseau (700) à réaliser le procédé selon l'une quelconque des revendications 1 à 4.

6. Procédé réalisé par une fonction de gestion de session, SMF, associée à une première tranche de réseau dans un réseau central (110) d'un système de communications cellulaires (100), le procédé comprenant :
la réception (Fig. 6, étape 1), provenant d'une fonction de gestion d'accès et de mobilité, AMF, d'un premier message qui initie le transfert d'une ou plusieurs sessions d'une unité de données de protocole, PDU, d'un équipement utilisateur, UE, (112) de la première tranche de réseau vers une seconde tranche de réseau, dans lequel le premier message comprend des informations qui indiquent la seconde tranche de réseau et des informations qui indiquent qu'une logique de mode 3 de continuité de session et de service, SSC, peut être appliquée ; et l'envoi (Fig. 6, étape 4), vers l'UE (112), d'un message de gestion de session qui provoque le transfert des une ou plusieurs sessions de PDU de l'UE (112) de la première tranche de réseau vers la seconde tranche de réseau.

7. Procédé selon la revendication 6, dans lequel le premier message comprend en outre des informations qui indiquent la première tranche de réseau.

8. Procédé selon la revendication 6 ou 7, dans lequel le premier message comprend en outre :
des informations qui indiquent si le transfert des une ou plusieurs sessions de PDU de la première tranche de réseau vers la seconde tranche de réseau doit être réalisé immédiatement ou à une heure programmée.

9. Procédé selon l'une quelconque des revendications 6 à 8, dans lequel :
{i} l'envoi (Fig. 6, étape 4) du message de gestion de session vers l'UE (112) comprend l'envoi (Fig. 6, étape 4) à l'AMF d'un second message comprenant le message de gestion de session ; et/ou
{ii} dans lequel le premier message est une demande Nsmf_PDUSession_UpdateSMContext ; et/ou
{iii} dans lequel le message de gestion de session est une requête de modification de session de PDU.

10. Nœud de réseau (700) pour la mise en œuvre d'une fonction de gestion de session, SMF, associée à une première tranche de réseau dans un réseau central (110) d'un système de communications cellulaires (100), le nœud de réseau (700) comprenant un circuit de traitement (704 ; 804) configuré pour amener le nœud de réseau (700) à réaliser le procédé selon l'une quelconque des revendications 6 à 9.

11. Procédé réalisé par un équipement utilisateur, UE, (112), le procédé comprenant :
la réception (Fig. 6, étape 5a) d'un premier message provenant d'une fonction de gestion de session, SMF, dans lequel le premier message initie le transfert d'une ou plusieurs sessions d'une unité de données de protocole, PDU, de l'UE (112) d'une première tranche de réseau vers une seconde tranche de réseau, dans lequel le premier message comprend des informations qui indiquent la seconde tranche de réseau et des informations qui indiquent qu'une logique de mode 3 de continuité de session et de service, SSC, peut être appliquée ; et
la réalisation d'une ou plusieurs actions pour effectuer le transfert des une ou plusieurs sessions de PDU de la première tranche de réseau vers la seconde tranche de réseau en réponse au premier message.

12. Procédé selon la revendication 11, dans lequel le premier message comprend en outre des informations qui indiquent la première tranche de réseau.

13. Procédé selon l'une quelconque des revendications 11 à 12, dans lequel le premier message est une requête de modification de session de PDU.

14. Équipement utilisateur, UE, (1000) comprenant :
un ou plusieurs émetteurs (1008) ;
un ou plusieurs récepteurs (1010) ;
un circuit de traitement (1002) associé aux un ou plusieurs émetteurs (1008) et aux un ou plusieurs récepteurs (1010), le circuit de traitement étant configuré pour amener l'UE (1000) à réaliser le procédé selon l'une quelconque des revendications 11 à 13.

15. Procédé réalisé par une fonction de gestion d'accès et de mobilité, AMF, dans un réseau central (110) d'un système de communications cellulaires (100), le procédé comprenant :
l'envoi (Fig. 5, étape 1), vers un équipement utilisateur, UE, (112), d'une commande de mise à jour de configuration d'UE comprenant :
des informations qui indiquent qu'une première tranche de réseau est supprimée ou doit être supprimée d'un ensemble de tranches de réseau autorisées pour l'UE (112) ;
des informations qui indiquent une instruction de transférer une ou plusieurs sessions d'une unité de données de protocole, PDU, de l'UE (112) établies sur la première tranche de réseau vers une seconde tranche de réseau ; et
une indication que l'UE (112) peut appliquer une logique de mode 3 de continuité de session et de service, SSC, pour le transfert de session de PDU.

16. Procédé selon la revendication 15, dans lequel la commande de mise à jour de configuration d'UE comprend en outre des informations qui ajoutent la seconde tranche de réseau à l'ensemble de tranches de réseau autorisées de l'UE (112) ; ou dans lequel la commande de mise à jour de configuration d'UE n'ajoute pas la seconde tranche de réseau à l'ensemble de tranches de réseau autorisées de l'UE (112).

17. Procédé réalisé par un équipement utilisateur, UE, (112), le procédé comprenant :
la réception (Fig. 5, étape 1), provenant d'une fonction de gestion d'accès et de mobilité, AMF, dans un réseau central (110) d'un système de communications cellulaires (100), d'une commande de mise à jour de configuration d'UE comprenant :
des informations qui indiquent qu'une première tranche de réseau est supprimée ou doit être supprimée d'un ensemble de tranches de réseau autorisées pour l'UE (112) ; et des informations qui indiquent une instruction de transférer une ou plusieurs sessions d'une unité de données de protocole, PDU, de l'UE (112) établies sur la première tranche de réseau vers une seconde tranche de réseau ; et
la réalisation (Fig. 5, étape 3) d'une procédure d'établissement de session de PDU vis-à-vis de la seconde tranche de réseau pour transférer les une ou plusieurs sessions de PDU de la première tranche de réseau vers la seconde tranche de réseau,
dans lequel la commande de mise à jour de configuration d'UE comprend en outre une indication que l'UE (112) peut appliquer une logique de mode 3 de continuité de session et de service, SSC, pour le transfert de session de PDU.

18. Procédé selon la revendication 17, dans lequel la commande de mise à jour de configuration d'UE comprend en outre des informations qui ajoutent la seconde tranche de réseau à l'ensemble de tranches de réseau autorisées de l'UE (112).

19. Procédé selon la revendication 17 ou 18, comprenant en outre l'envoi (Fig. 5, étape 2b) d'une requête d'enregistrement à la seconde tranche de réseau par laquelle une tranche de réseau cible est ajoutée à l'ensemble de tranches de réseau autorisées de l'UE (112).

20. Équipement utilisateur, UE, (112), adapté pour réaliser le procédé selon l'une quelconque des revendications 17 à 19.
